# EUROPEAN PATENT APPLICATION

(11) **EP 4 414 473 A1**
(43) Date of publication of application: **14.08.2024**
(21) Application number: 22894373.4
(22) Date of filing: 29.08.2022
(51) Int. Cl.: C22C 38/02, C22C 38/04, C22C 38/06, C22C 38/42, C22C 38/44, C22C 38/46, C22C 33/04, C21D 8/02

(54) **HIGH-STRENGTH STEEL WITH GOOD WEATHER RESISTANCE AND MANUFACTURING METHOD THEREFOR**

(30) Priority: 22.11.2021 CN 202111382933
(71) Applicant: BAOSHAN IRON & STEEL CO., LTD., Shanghai 201900 (CN)
(72) Inventor: ZHAO, Sixin, Shanghai 201900 (CN); WANG, Chengquan, Shanghai 201900 (CN)
(74) Representative: Maiwald GmbH
(86) International application number: PCT/CN2022/115498
(87) International publication number: WO 2023/087833

(57) **Abstract**

Disclosed in the present disclosure is a steel. Apart from 90% or more by mass Fe and inevitable impurities, the steel further contains the following chemical elements in percentage by mass: C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%. Further disclosed in the present disclosure is a method for manufacturing the steel, comprising: (1) smelting and casting; (2) forging or rolling, involving processing a casting blank to a finished product size by using a roll-in-one-heat process or roll-in-two-heat process; and (3) quenching and tempering: wherein the heating temperature of quenching is 860-1000°C, the holding time is 2-6 h, and water cooling is performed after the quenching; and the tempering temperature is 400-600°C, the holding time is 1-4 h, and air cooling to room temperature is performed after tempering. The steel of the present disclosure has high strength, well matched toughness and plasticity, and good weather resistance, thereby having good application prospects.

## Description

### TECHNICAL FIELD

The present disclosure relates to a steel and a manufacturing method therefor, in particular to a high-strength weather-resistant steel and a manufacturing method therefor.

### BACKGROUND

Weather-resistant steels are a class of low-alloy high-strength steels with good corrosion resistance in the atmosphere. In general, the weather resistance of the weather-resistant steel is twice or more that of an ordinary carbon steel. The weather-resistant steel has excellent performances and broad application prospects, and is commonly used to manufacture various high-strength structural parts for use in exposure to the atmosphere, and the service life of the high-strength structural parts can be prolonged.

Currently, among weather-resistant steels that comply with the national standard "GB/T4171-2008", the grade of weather-resistant steel with the highest strength is Q550NH, which has a chemical composition of C≤0.16%; Si≤0.65%; Mn≤2.0%; P≤0.025%; S≤0.030%; Cu: 0.20-0.55%; Cr: 0.30-1.25%; Ni: 0.12-0.65%, and has a yield strength of 550 MPa or more, a tensile strength of 620-780 MPa, and an elongation after fracture of 16% or more.

However, in recent years, with the requirements of energy saving and environmental protection and lightweight in related industries in China, the market has put forward new demands for the strength and weather resistance of the weather-resistant steel. Existing steel products are gradually unable to meet current market demands. Therefore, there is an urgent need to develop a new weather-resistant steel product with higher strength.

Chinese patent CN103266274B (published on December 2, 2015, and entitled "Ultrahigh-strength cold-rolled weather-resistant steel plate and manufacturing method thereof') discloses a high-strength cold-rolled weather-resistant steel plate, which comprises the following chemical elements in percentage by weight: C: 0.05-0.16%; Mn: 1.00-2.20%; Al: 0.02-0.06%; Cu: 0.20-0.40%; Cr: 0.40-0.60%; Ti: 0.015-0.035 wt %; P≤0.03%, and the balance being Fe and other inevitable impurities, wherein 0.19%<C+Mn/16<0.23%. The technical solution can obtain a steel with a yield strength of more than 700 MPa and a tensile strength of more than 1000 MPa through a process flow of smelting, heating and heat preservation, hot rolling, coiling, pickling, cold rolling, continuous annealing and leveling.

Chinese application CN111378896A (published on July 7, 2020, and entitled "High-strength weather-resistant steel plate for building bridge and manufacturing method thereof") discloses a high-strength weather-resistant steel plate for a building bridge. The steel plate has a chemical composition including: C: 0.03-0.09%, Si: 0.05%-0.55%, Mn: 1.10%-2.00%, P≤0.012%, S≤0.003%, Cr: 0.50%-1.00%, Cu: 0.30%-0.50%, Ni: 0.20%-1.20%, Als: 0.015%-0.050, Ti: 0.002%-0.030%, V: 0.002%-0.08%, Mo: 0.01%-0.80%, B: 0.0001%-0.0025%, the balance being Fe, CEV≤0.65%, Pcm≤0.28, and an atmospheric corrosion resistance index I≥6.5. The steel manufactured by this application has a yield strength of 620 MPa or more, a tensile strength of 730 MPa-850 MPa, an elongation after fracture A of 16% or more, and an impact energy KV2 at - 40°C of 120 J or more.

Chinese application CN106756476A (published on May 31, 2017, and entitled "High-strength high dampness and heat resistant weather-resistant steel for marine atmospheric environment and manufacturing method") discloses a high-strength high dampness and heat resistant weather-resistant steel for a marine atmospheric environment. The steel has a chemical composition (wt%) including: C: 0.01-0.03, Si: 0.30-0.50, Mn: 0.60-0.80, Cu: 0.90-1.10, Ni: 2.80-3.20, Mo: 0.20-0.40, Sn: 0.25-0.35, Sb: 0.05-0.10, Cr≤0.03, Nb≤0.02, P≤0.01, S≤0.01, RE: 0.03-0.05, the balance being Fe. In this application, the Cr content in the weather-resistant steel is significantly reduced by adding various microalloying elements such as Sn, Sb, Nb, and RE on the basis of a Cu-Ni-Mo alloy system, and the manufactured steel has a yield strength of 650 MPa or more and a tensile strength of 750 MPa or more, and a half-dimensional impact energy at 30°C reaches 65 J.

As can be seen from the above prior arts, most of the existing high-strength weather-resistant steel products have a yield strength of 600-800 MPa, and there are few high-strength weather-resistant steel products having a yield strength exceeding 1000 MPa.

In light of this, it is necessary to develop a new weather-resistant steel having a high strength of 1000 MPa or more, while also having well matched toughness and plasticity, and excellent weather resistance. Such new weather-resistant steel should be able to be used to manufacture high-performance industrial chains, and can well solve the problem that the service life of the existing steel is affected due to the mismatch of strength, toughness and plasticity, and weather resistance.

### SUMMARY

An object of the present disclosure is to provide a high-strength steel with good weather resistance. The steel has a high strength of 1000 MPa or more, well matched toughness and plasticity, and good weather resistance, and is particularly suitable for manufacturing high-strength weather-resistant structural parts, and industrial chain products for mining, mooring and other purposes, and can be widely applied to occasions with a large amount of corrosive media such as engineering machinery, mining and marine engineering.

In order to achieve the above object, the present disclosure provides a steel, wherein the steel contains the following chemical elements in percentage by mass apart from 90% or more by mass Fe and inevitable impurities:
C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%.

Preferably, the steel of the present disclosure consists of the following chemical elements in percentage by mass:
C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%, the balance being Fe and inevitable impurities.

In the steel of the present disclosure, the design principle of each chemical element is as follows:
C: In the steel of the present disclosure, C is an element necessary to ensure the strength of the steel. Increasing C content in steel will increase the non-equilibrium structure transformation ability of thesteel, thereby significantly improving the strength of the steel. In addition, in the present disclosure, diffusion of C element in the steel can be inhibited by the quenching and tempering heat treatment process to form shear martensitic transformation, thereby remarkably improving the strength of steel.

However, the content of C element in the steel of the present disclosure should not be too high, as too high a C content will have adverse effects on the plasticity and toughness of the steel, and will significantly increase the carbon equivalent of the material, deteriorating the welding performance of the steel. Therefore, the content of C element in the steel of the present disclosure is controlled to be 0.22-0.33%.

Si: In the steel of the present disclosure, Si element can be solid-solutioned in the steel to play a role of solid solution strengthening. Si element can significantly improve the yield strength, fatigue strength and hardness of the steel. However, it should be noted that the solubility of Si in cementite is very low, and the content of Si element in the steel should be not too high. When the content of Si element in the steel is too high, not only a carbide-free bainite structure will be formed, but also the brittleness of the steel will be increased. Therefore, the content of Si element in the steel of the present disclosure is controlled to be 0.1-1.0%.

Mn: In the steel of the present disclosure, Mn element can improve the stability of austenite in the steel while also increasing the hardenability of the steel. In addition, Mn can also improve the strength of martensite in the steel by solid solution strengthening, thereby improving the strength of the steel. However, it should be noted that the content of Mn element in the steel should be not too high. When the content of Mn element in the steel is too high, austenite grains will grow easily during quenching heating, promoting the segregation of harmful elements at grain boundaries. Therefore, the content of Mn element in the steel of the present disclosure is controlled to be 0.3-1.5%.

Cr: In the steel of the present disclosure, addition of an appropriate amount of Cr element can improve the hardenability of the steel, and has a secondary hardening effect, and can form a hardened martensitic structure, which is beneficial to improve the strength of the steel. In addition, Cr carbides can slow down the growth of grains in the heat affected zone at weld joints, and is very beneficial for the welding of the steel. Adding an appropriate amount of Cr and Ni elements to the steel is beneficial for improving the weather resistance of the steel. However, the content of Cr element in the steel should be not too high. When the content of Cr element in the steel is too high, a large amount of carbides will be generated and agglomerated at grain boundaries, thereby reducing the toughness of the material, significantly increasing the carbon equivalent and deteriorating the welding performance of the steel. Therefore, the content of Cr element in the steel of the present disclosure is controlled to be 0.2-1.6%.

Ni: In the steel of the present disclosure, Ni is an austenite forming element. As one of main strengthening elements, Ni can exist in the steel in the form of solid solution and can be infinitely solid-solutioned with iron. In addition, when Ni element is used in combination with Cr element, the hardenability of the steel can also be remarkably improved.

The addition of an appropriate amount of Ni element to steel can effectively reduce the C content at a eutectoid point, strengthen ferrite, and refine and increase pearlite, which can improve the strength of the steel without significantly affecting the plasticity of the steel. In addition, Ni element can improve the fatigue resistance of steel, reduce the sensitivity of steel to notches, reduce the transition temperature of low temperature embrittlement of steel, and improve the impact toughness of steel. Ni element can improve the strength of steel with less damage to toughness, plasticity and other properties of steel than other alloying elements.

Therefore, in order to exert the beneficial effects of Ni element while minimizing the cost of steel, the content of Ni element in the steel of the present disclosure is controlled to be 2.2-3.8%.

Mo: In the steel of the present disclosure, Mo element is mainly present in the steel in the form of solid solution. Mo has a solid solution strengthening effect, which is beneficial to improve the hardenability of steel, allowing the martensite to form in steel during quenching. However, the content of Mo element in the steel should not be too high. When the content of the Mo element in the steel is too high, the carbon equivalent of the material is significantly increased, which is not conducive to the welding performance of the steel. In addition, Mo is a valuable alloying element, and the addition of an excessive amount of Mo element will lead to an increase in alloy cost. Therefore, the content of Mo element in the steel of the present disclosure is controlled to be 0.1-0.7%.

Cu: In the steel of the present disclosure, the addition of an appropriate amount of Cu element can significantly improve the weather resistance of the steel and reduce the hydrogen-induced cracking susceptibility of the steel. However, it should be noted that too high a Cu content is not conducive to the welding performance of the steel, and also tends to cause a copper embrittlement phenomenon, deteriorating the surface properties of the steel. Therefore, the content of the Cu element in the steel of the present disclosure is controlled to be 0.02-0.3%.

Al: In the steel of the present disclosure, Al has the main functions of deoxidation and nitrogen fixation, and AlN formed by bonding Al to N can effectively refine grains. However, it should be noted that the content of Al element in the steel should be not too high. When the content of the Al element in the steel is too high, the pourability of the steel will be affected and the toughness of the steel will be deteriorated. Therefore, the content of Al element in the steel of the present disclosure is controlled to be 0.01-0.045%.

V: In the steel of the present disclosure, as a strong carbide forming element, V can significantly improve the strength of the steel in the form of dispersed precipitation. However, it should be noted that when the addition amount of V element in steel is too high, the toughness and welding performance of the steel will be reduced. Therefore, the content of the V element in the steel of the present disclosure is controlled to be 0.01-0.25%.

N: In the steel of the present disclosure, N is an austenite forming element and also an MX type precipitate forming element. To avoid enrichment of N element in steel, excessive N should not be added to the steel. Therefore, the content of N element must be strictly controlled, and in the steel of the present disclosure, the content of N element is controlled to not exceed 0.013%.

In the present disclosure, the inventors precisely control the microstructure of the steel of the present disclosure by reasonably designing the composition of the steel and the content of each chemical element in the steel, and utilizing the effect of the alloying elements themselves and their interactions on the microstructure and final properties, thereby ensuring the formation of a mixed multi-phase structure of tempered martensite + tempered bainite + carbides diffusely distributed between lamellae in the steel of the present disclosure. With such microstructure, the steel of the present disclosure has high strength, well matched toughness and plasticity, and good weather resistance, wear resistance and fatigue resistance.

Preferably, the steel of the present disclosure further contains Nb and/or Ti, wherein 0<Nb≤0.04%, and 0<Ti≤0.03%.

Nb: Nb is a strong carbide forming element. Adding an appropriate amount of Nb to steel can not only inhibit recrystallization of the steel, but also effectively refine grains. However, it should be noted that when the content of Nb element in steel is too high, coarse NbC particles will be formed under high temperature tempering conditions, and deteriorate the low temperature impact energy of the steel. Therefore, in the present disclosure, the content of the added Nb element is preferably controlled to satisfy: 0<Nb≤0.04%.

Ti: Ti element added to steel in an appropriate amount may form fine Ti(C,N) precipitates, which can effectively prevent structure coarsening and improve weld quality during welding of steel. However, the content of Ti element in steel should not too high. When the content of Ti element in steel is too high, coarse TiN particles with edges and corners will be formed during smelting, reducing the impact toughness and fatigue performance of the steel. Therefore, in the present disclosure, the content of the added Ti element is preferably controlled to satisfy: 0<Ti≤0.03%.

Preferably, in the steel of the present disclosure, the contents by mass percentage of elements C, Mn, Ni, Cr, Mo and Si also satisfy the following formula: 2.5≤(12×C+0.3×Mn+Ni)/(Cr+2Mo+2Si)≤3.2, wherein a symbol for a chemical element in the formula represents a numerical value before the percent sign of the content in mass percentage corresponding to the chemical element.

The inventors have found through extensive studies that when the contents of main strengthening elements C, Mn, Ni, Cr, Mo and Si in the steel are controlled to satisfy 2.5≤(12×C+0.3×Mn+Ni)/(Cr+2Mo+2Si)≤3.2, an optimal match between strength and toughness and plasticity can be further obtained.

In the steel, when the ratio (12×C+0.3×Mn+Ni)/(Cr+2Mo+2Si) is less than 2.5, the steel has a relatively reduced austenite zone, reduced stability of austenite, relatively high content of bainite that is easy to form during quenching, relatively low content of martensite, and relatively large in size and less in amount of carbide particles precipitated between lamellae during tempering, so that it is difficult to obtain an optimal match between strength and toughness and plasticity.

In the steel, when the ratio (12×C+0.3×Mn+Ni)/(Cr+2Mo+2Si) is greater than 3.2, the steel has an enlarged austenitic zone, improved stability of austenite, inhibited diffusion phase transformation during quenching and tempering heat treatment, a large lamellar spacing of the martensite structure obtained during quenching, large amount of dispersed carbides precipitated between the lamellae during tempering, high strength, and relatively low toughness and plasticity, so that it is difficult to obtain an optimal match between strength and toughness and plasticity.

In the present disclosure, P element, S element and O element are all impurity elements in the steel. In order to obtain steel with better performance and better quality, the content of impurity elements in the material should be reduced as much as possible when technical conditions allow.

Preferably, in the steel of the present disclosure, the contents by mass percentage of the inevitable impurities satisfy: P≤0.015%, S≤0.01%, and O≤0.002%

In the steel of the present disclosure, both P element and S element are inevitable harmful impurity elements in the steel, and will deteriorate the properties of the steel. Although P can improve the weather resistance of the steel, its side effects are greater on the whole. Therefore, in the present disclosure, P element is controlled to satisfy: P≤0.015%, and the S element is controlled to satisfy: S≤0.01%.

In the present disclosure, the impurity element O may form oxides and complex inclusions that are not conducive to the properties of steel with deoxidizing elements such as Al in the steel. Therefore, in the present disclosure, O element is controlled to satisfy: O≤0.0015%.

In some other embodiments, other harmful elements such as As, Pb, Sn, Sb and Bi may be present in the steel. The content of these harmful elements should be reduced as much as possible under the requirements of national laws and regulations and standards.

Preferably, the steel of the present disclosure has a weather resistance index I of 10.0 or more, wherein I=26.01×Cu+3.88×Ni+1.20×Cr+1.49×Si+17.28×P-7.29×Cu×Ni-9.10×Ni×P-33.39×Cu², wherein a symbol for a chemical element in the formula represents a numerical value before the percent sign of the content in mass percentage corresponding to the chemical element.

The steel of the present disclosure is added with a large amount of Ni, Mn, and Cu elements. These elements can effectively improve the weather resistance index I of the steel, thereby ensuring that the steel not only has high strength and toughness, but also has good weather resistance. By controlling the weather resistance index I of the steel of the present disclosure to be 10.0 or more, it can be ensured that the steel obtains good environmental corrosion resistance, thereby further ensuring that the steel of the present disclosure is not prone to corrosion fracture during use, improving the service life. Preferably, the steel of the present disclosure has a microstructure of tempered martensite + tempered bainite + carbides diffusely distributed between lamellae.

Preferably, the steel of the present disclosure has the following performances: a yield strength R_{p0.2}≥1100 MPa, a tensile strength Rₘ≥1250 MPa, an elongation A≥14%, a percentage reduction of area≥50%, a Charpy impact energy Aₖᵥ at room temperature≥80 J, and a Charpy impact energy Aₖᵥ at -20°C≥70 J.

Another object of the present disclosure is to provide a method for manufacturing the present steel. The manufacturing method of the present disclosure is simple in process, and the obtained steel has excellent high strength and toughness, and good weather resistance, and has a yield strength R_{p0.2}≥1100 MPa, a tensile strength Rₘ≥1250 MPa, an elongation A≥14%, a percentage reduction of area≥50%, a Charpy impact energy Aₖᵥ at room temperature≥80 J, and a Charpy impact energy Aₖᵥ at -20°C≥70 J.

In order to achieve the above object, the present disclosure provides a method for manufacturing the steel, including the following steps in sequence:
(1) smelting and casting molten steel to manufacture a casting blank;
(2) forging or rolling the casting blank, wherein the casting blank is processed to a finished product size by using a roll-in-one-heat process or a roll-in-two-heat process; and
(3) performing quenching and tempering to manufacture a finished steel: in the quenching process, heating is performed at a temperature of 860-1000°C for a time of 2-6 h and a water cooling is then performed; following the quenching, the tempering is performed, wherein in the tempering process, tempering temperature is 400-600°C and holding time is 1-4 h, and an air cooling is then performed to cool the steel to room temperature after the tempering to manufacture the finished steel.

The inventors have conducted an in-depth study on the role of main strengthening elements such as C, Si, Mn, Ni, Cr, and Mo in the composition of the steel in the quenching and tempering heat treatment.

The inventors found that, the microstructure of the steel of the present disclosure can be precisely controlled by reasonably designing the proportion of alloying elements in conjunction with an optimally designed quenching and tempering heat treatment process to utilize the effect of the alloying elements themselves and their interactions on the microstructure of the steel after the quenching and tempering heat treatment. After the quenching and tempering heat treatment, a mixed multi-phase structure of tempered martensite, tempered bainite and carbides dispersed between lamellae is formed, thereby ensuring the properties of the steel of the present disclosure.

The inventors have optimally designed the quenching and tempering heat treatment in the step (3). During the quenching, the steel is heated at a heating temperature of 860-1000°C for 2-6 h to fully austenitize the steel. Carbide or nitride particles of elements such as Cr, Mo, Nb, V, Ti, and Al in the steel are partially dissolved into austenite. Undissolved carbides and carbide particles continue to pin austenite grain boundaries, inhibiting austenite grain growth. By optimally designing the process parameters during quenching, finer non-equilibrium structures such as martensite and bainite can be formed in the steel, thereby ensuring that the steel of the present disclosure has higher strength.

During tempering, heat preservation is performed at a tempering temperature of 400-600°C for 1-4 h. In this process, the high-density dislocations formed during quenching of the steel are partially annihilated, and supersaturated C, Cr, and Mo elements solid-solutioned in the non-equilibrium structures in the steel can be precipitated again in the form of carbides in the middle of the lamellae of martensite or bainite. At this time, the precipitated particles are less likely to grow due to the low temperature during precipitation, so that the precipitated particles are more finely dispersed.

Thus, in the quenching and tempering heat treatment of the present disclosure, dislocation annihilation and precipitation of carbides and nitrides will lead to the reduction of an internal stress and the improvement of the plasticity and toughness of the steel, thereby ensuring that the steel has higher strength and well-matched plasticity and toughness.

Preferably, in the manufacturing method of the present disclosure, in the step (1), smeltered molten steel is cast into a casting blank by using die casting or continuous casting. In the case of using die casting, baking temperature of an ingot mould is 200°C or more. In the case of using continuous casting, baking temperature of a tundish is 1100°C or more and baking time is 3.5 h or more.

Preferably, in the step (1) of the above manufacturing method of the present disclosure, molten steel can be smelted with an electric furnace or a converter and subjected to LF and VD or RH vacuum refining treatment. After its chemical composition meets the design requirements of the present disclosure, tapping can be performed for casting. In casting process, refined molten steel can be cast into a casting blank by using die casting or continuous casting process. In the case of using die casting, baking temperature of an ingot mould can be controlled to be 200°C or more. In the case of using continuous casting, baking temperature of a tundish can be controlled to be 1100°C or more, and baking time can be controlled to be 3.5 h or more. Preferably, hot charging or offline slow cooling time of casting blank is controlled to be 24 h or more.

Preferably, in the manufacturing method of the present disclosure, in the step (2), in the case of using roll-in-one-heat process, a casting blank is directly rolled or forged to the size of finished product, wherein heating temperature of the casting blank is 1150-1250°C, holding time is 3-12 h, initial rolling temperature or initial forging temperature is 1050°C or more, and final rolling temperature or final forging temperature is 900°C or more.

Preferably, in the manufacturing method of the present disclosure, in the step (2), in the case of using the roll-in-two-heat process, the casting blank is first forged or rolled into an intermediate slab, and then the intermediate slab is forged or rolled into the finished product size, wherein the casting blank heating temperature is 1150-1250°C, the holding time is 3-12 h, the initial rolling temperature or the initial forging temperature is 1050°C or more, and the final rolling temperature or the final forging temperature is 950°C or more; and the intermediate slab heating temperature is 1120-1200°C, the holding time is 3-10 h, the initial rolling temperature of the intermediate slab is 1050°C or more, and the final rolling temperature of the intermediate slab is 860°C or more.

Preferably, in the manufacturing method of the present disclosure, in the step (2), during forging or rolling, a casting blank may be processed to the size of finished product by roll-in-one-heat process or roll-in-two-heat process, and the size of finished product may have a specification in the range of Φ 26-150 mm.

Herein, roll-in-one-heat process means that a casting blank is directly forged or rolled to the size of final finished product during forging or rolling of the casting blank; and roll-in-two-heat process means that a casting blank is first forged or rolled to an intermediate slab with a predetermined size, and then the intermediate slab is forged or rolled to the size of final finished product.

It should be noted that in the step (2) of the present disclosure, whether the roll-in-one-heat process or the roll-in-two-heat process is adopted, a casting blank needs to be heated at 1150-1250°C. During the heating process, the precipitate phase dissolution and austenite grain growth of the casting blank will occur.

Precipitates of Cr, Mo, Nb, V, Ti, Al, etc. formed in the casting blank will be partially or completely dissolved in austenite during high-temperature heating. Undissolved precipitates will pin austenite grain boundaries and inhibit excessive growth of austenite grains. At this time, heat preservation at this higher heating temperature (i.e., 1150-1250°C) for a certain period of time facilitates diffusion of segregated elements in the steel, making the distribution of elements in the casting blank more uniform.

Accordingly, during rolling and cooling, with the decrease of the temperature, elements such as Ti, Nb and Al in the steel will precipitate again from the steel to form finely dispersed particles, inhibiting the growth of recrystallized grains and refining the structure. Alloying elements such as Cr and Mo that are solid-solutioned in the steel will inhibit diffusion phase transformation during cooling and form medium- and low-temperature transformation structures such as bainite and martensite, thereby improving the strength of the steel.

In addition, it should be noted that in the step (2), before the forging or rolling starts, the casting blank can be first controlled to be discharged from a heating furnace and subjected to high-pressure water descaling; and after forging or rolling, cooling may be performed by air cooling or slow cooling.

Compared with the prior arts, the steel and the manufacturing method therefor of the present disclosure have the following advantages and beneficial effects.

In the present disclosure, main strengthening elements such as C, Si, Mn, Ni, Cr, and Mo are optimally designed in the steel. By adopting reasonable element ratios in combination with the quenching and tempering heat treatment process, the transformation of martensite and bainite structures in the steel of the present disclosure during quenching cooling, and carbide precipitation during tempering can be controlled, and thus the microstructure of the steel can be controlled to be tempered martensite + tempered bainite + carbides diffusely distributed between lamellae, so as to ensure that the steel of the present disclosure obtains an optimal match between strength and toughness and plasticity.

In addition, it should be noted that in some preferred embodiments of the present disclosure, the value of the weather resistance index I of the steel can be further increased, so that the steel obtains better weather resistance, thereby greatly prolonging the service life of the steel under a harsh environment.

The chemical composition and process design of the steel of the present disclosure are reasonable, the process window is loose, and mass commercial production can be achieved.

The steel of the present disclosure has excellent high strength and toughness and good weather resistance, can be manufactured into high-strength weather-resistant structural parts and high-performance industrial chains such as mining chains and mooring chains, and is widely applied to occasions requiring high-strength and high-toughness steel such as engineering machinery, mining and marine engineering.

### BRIEF DESCRIPTION OF THE DRAWINGS

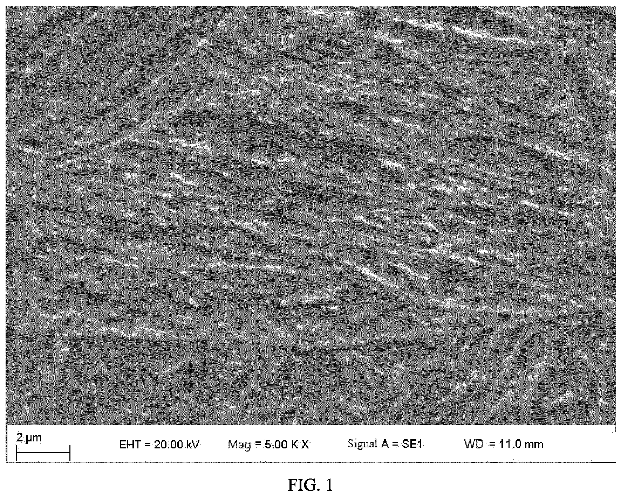

FIG. 1 is a photograph of the microstructure of the steel in Example 1 under a 5000X microscope.

### DETAILED DESCRIPTION

The steel and the manufacturing method therefor of the present disclosure will be further explained and illustrated below with reference to specific examples. However, such explanation and illustration do not constitute an improper limitation on the technical solution of the present disclosure.

### Examples 1-10 and Comparative Examples 1-3

Steels of Examples 1-10 were manufactured by the following steps:
(1) Molten steel was subjected to smelting and continuous casting according to the chemical compositions shown in Table 1-1 and Table 1-2 below to manufacture a casting blank. Smelting was performed by using an electric furnace or a converter, and LF refining and VD or RH vacuum treatment were performed. After the composition meets the requirements, tapping was performed. Then the smelted molten steel was cast into a casting blank by using die casting or continuous casting, wherein hot charging or offline slow cooling time of the casting blank was controlled to be 24 h or more. In the case of using die casting, baking temperature of ingot mould was controlled to be 200°C or more. In the case of using continuous casting, baking temperature of a tundish was controlled to be 1100°C or more and baking time was controlled to be 3.5 h or more.
(2) The casting blank was forged or rolled. The casting blank was processed to the size of finished product by using a roll-in-one-heat process or a roll-in-two-heat process, wherein the size of finished product is in the range of Φ 26-150 mm.
   In the case of using roll-in-one-heat process, the heating temperature of casting blank was controlled to be 1150-1250°C, holding time was controlled to be 3-12 h, initial rolling temperature or initial forging temperature was controlled to be 1050°C or more, and final rolling temperature or final forging temperature was controlled to be 900°C or more. In the case of using roll-in-two-heat process, heating temperature of casting blank was controlled to be 1150-1250°C, holding time was controlled to be 3-12 h, initial rolling temperature or initial forging temperature was controlled to be 1050°C or more, and final rolling temperature or final forging temperature was controlled to be 950°C or more; and heating temperature of intermediate slab was controlled to be 1120-1200°C, holding time was controlled to be 3-10 h, initial rolling temperature of intermediate slab was controlled to be 1050°C or more, and final rolling temperature of intermediate slab was controlled to be 860°C or more.
(3) Quenching and tempering were performed to manufacture a finished steel. In the quenching process, heating temperature was 860-1000°C, holding time was 2-6 h. Water cooling was performed after the quenching. Then, tempering was performed. In tempering process, tempering temperature was 400-600°C and holding time was 1-4 h. After tempering, air cooling was performed to cool the steel to room temperature to manufacture a finished steel.

In the present disclosure, the chemical composition and related process parameters of the steels in Examples 1-10 all meet the design specification requirements of the present disclosure.

In contrast, steels in Comparative Examples 1-3 are finished steels from different manufacturers, and their chemical compositions are shown in Tables 1-1 and 1-2 below. Although the steels in Comparative Examples 1-3 are also manufactured by using the process steps described above, at least one of the chemical compositions and manufacturing process parameters of the steels in Comparative Examples 1-3 does not meet the requirements of the present disclosure.

Tables 1-1 and 1-2 list the chemical compositions of the steels in Examples 1-10 and Comparative Examples 1-3.

**Table 1-1**

| (wt%, the balance being Fe and other inevitable impurities besides P, S and O) | | | | | | | | | | | | | | | |
|---|---|---|---|---|---|---|---|---|---|---|---|---|---|---|---|
| No. | C | Si | Mn | P | S | Cr | Ni | Mo | Cu | Al | Nb | V | Ti | N | O |
| Example 1 | 0.24 | 0.24 | 1.21 | 0.011 | 0.006 | 0.41 | 3.78 | 0.67 | 0.18 | 0.021 | 0.021 | 0.05 | 0.007 | 0.0071 | 0.0011 |
| Example 2 | 0.225 | 0.47 | 0.76 | 0.005 | 0.004 | 0.67 | 2.57 | 0.23 | 0.11 | 0.011 | 0.038 | 0.21 | 0.026 | 0.0117 | 0.0013 |
| Example 3 | 0.25 | 0.12 | 1.42 | 0.009 | 0.003 | 0.85 | 2.98 | 0.58 | 0.02 | 0.044 | - | 0.08 | 0.004 | 0.0098 | 0.0009 |
| Example 4 | 0.3 | 0.78 | 0.58 | 0.008 | 0.005 | 0.33 | 3.35 | 0.41 | 0.22 | 0.015 | 0.013 | 0.18 | 0.011 | 0.0055 | 0.0008 |
| Example 5 | 0.31 | 0.55 | 0.32 | 0.012 | 0.002 | 0.55 | 2.25 | 0.34 | 0.28 | 0.032 | 0.031 | 0.25 | 0.019 | 0.0039 | 0.0012 |
| Example 6 | 0.27 | 0.96 | 1.05 | 0.01 | 0.002 | 0.21 | 3.52 | 0.12 | 0.08 | 0.025 | 0.028 | 0.12 | 0.015 | 0.0106 | 0.0015 |
| Example 7 | 0.33 | 0.3 | 0.47 | 0.013 | 0.009 | 0.95 | 3.03 | 0.61 | 0.06 | 0.018 | 0.035 | 0.01 | - | 0.0129 | 0.0005 |
| Example 8 | 0.3 | 0.4 | 0.88 | 0.006 | 0.01 | 1.31 | 3.47 | 0.18 | 0.29 | 0.028 | 0.009 | 0.02 | 0.013 | 0.0123 | 0.0007 |
| Example 9 | 0.24 | 0.18 | 1.47 | 0.015 | 0.008 | 1.15 | 3.12 | 0.29 | 0.25 | 0.039 | 0.017 | 0.15 | 0.029 | 0.0085 | 0.0016 |
| Example 10 | 0.29 | 0.21 | 0.65 | 0.007 | 0.007 | 1.57 | 3.69 | 0.47 | 0.15 | 0.035 | 0.024 | 0.09 | 0.023 | 0.0064 | 0.0019 |
| Comparative Example 1 | 0.25 | 0.15 | 1.3 | 0.008 | 0.006 | 0.55 | ***0.98*** | 0.56 | 0.11 | 0.027 | 0.003 | ***0.005*** | 0.007 | 0.0086 | 0.0012 |
| Comparative Example 2 | 0.245 | 0.8 | 2 | 0.015 | 0.002 | 0.2 | 3.4 | ***0.9*** | 0.2 | 0.03 | ***0.08*** | ***0.008*** | 0.005 | 0.01 | 0.0015 |
| Comparative Example 3 | ***0.054*** | 0.35 | 0.63 | 0.004 | 0.003 | ***1.94*** | ***0.96*** | - | ***0.32*** | 0.04 | - | 0.026 | - | - | - |

**Table 1-2**

| No. | (12×C+0.3×Mn+Ni)/(Cr+2Mo+2Si) | I |
|---|---|---|
| Example 1 | 3.15 | 13.97 |
| Example 2 | 2.66 | 11.85 |
| Example 3 | 2.85 | 12.75 |
| Example 4 | 2.63 | 13.18 |
| Example 5 | 2.60 | 10.23 |
| Example 6 | 2.99 | 15.01 |
| Example 7 | 2.57 | 13.33 |
| Example 8 | 2.97 | 12.93 |
| Example 9 | 3.08 | 12.31 |
| Example 10 | 2.51 | 15.52 |
| Comparative Example 1 | ***2.22*** | ***6.43*** |
| Comparative Example 2 | ***1.93*** | 13.33 |
| Comparative Example 3 | ***0.68*** | **9.25** |

| | | |
|---|---|---|
| Note: I=26.01×Cu+3.88×Ni+1.20×Cr+1.49×Si+17.28×P-7.29×Cu×Ni-9.10×Ni×P-33.39×Cu²; and in the above Table 1-2, each symbol for chemical element in the formula is substituted with a numerical value before the percent sign of the content in mass percentage corresponding to the chemical element. | | |

The specific manufacture process operations of the steels in Examples 1-10 are as follows:

### Example 1

Electric furnace smelting was performed according to the chemical compositions shown in Table 1-1 and Table 1-2. LF refining and RH vacuum treatment were performed, and then casting was performed to obtain a continuous casting blank. During the continuous casting, the baking temperature of a tundish was controlled to be 1150°C, and the baking time was controlled to be 5 h; and the slow cooling time of the casting blank was controlled to be 35 h. In this Example, the casting blank was processed to a finished product size by using a roll-in-two-heat process. Firstly, the continuously casting blank was heated to 1150°C and held for 12 h. Then the casting blank was discharged from a heating furnace and subjected to high-pressure water descaling. Then rolling was performed to manufacture an intermediate slab having a size of 280×280 mm, wherein the initial rolling temperature was controlled to be 1090°C, and the final rolling temperature was controlled to be 950°C. The obtained intermediate slab was then heated to 1120°C and held for 10 h, and then was discharged from the furnace and subjected to high-pressure water descaling. After that, rolling was performed to manufacture a steel having a specification of Φ75 mm, wherein the initial rolling temperature was controlled to be 1050°C, and the final rolling temperature was controlled to be 880°C. Air cooling was performed after the rolling. Then quenching and tempering heat treatment was performed, wherein the heating temperature of quenching was controlled to be 940°C and the holding time was controlled to be 4 h, and the tempering temperature was controlled to be 450°C and the holding time was controlled to be 3 h. Then water cooling was performed to cool the steel to room temperature.

### Example 2

Electric furnace smelting was performed according to the chemical compositions shown in Table 1-1 and Table 1-2. LF refining and RH vacuum treatment were performed, and then casting was performed to obtain a continuous casting blank. During the continuous casting, the baking temperature of a tundish was controlled to be 1100°C, and the baking time was controlled to be 6 h; and the slow cooling time of the casting blank was controlled to be 30 h. In this Example, the casting blank was processed to a finished product size by using a roll-in-two-heat process. Firstly, the continuously casting blank was heated to 1220°C and held for 4 h. Then the continuous casting blank was discharged from a heating furnace and subjected to high-pressure water descaling. Then rolling was performed to manufacture an intermediate slab having a size of 260×260 mm, wherein the initial rolling temperature was controlled to be 1120°C, and the final rolling temperature was controlled to be 980°C. The obtained intermediate slab was then heated to 1130°C and held for 6 h, and then was discharged from the furnace and subjected to high-pressure water descaling. After that, rolling was performed to manufacture a steel having a specification of Φ60 mm, wherein the initial rolling temperature was controlled to be 1060°C, and the final rolling temperature was controlled to be 890°C. Air cooling was performed after the rolling. Then quenching and tempering heat treatment was performed, wherein the heating temperature of quenching was controlled to be 990°C and the holding time was controlled to be 3 h, and the tempering temperature was controlled to be 420°C and the holding time was controlled to be 2 h. Then air cooling was performed to cool the steel to room temperature.

### Example 3

Electric furnace smelting was performed according to the chemical compositions shown in Table 1-1 and Table 1-2. LF refining and RH vacuum treatment were performed, and then casting was performed to obtain a continuous casting blank. During the continuous casting, the baking temperature of a tundish was controlled to be 1250°C, and the baking time was controlled to be 4.5 h; and the slow cooling time of the casting blank was controlled to be 28 h. In this Example, the casting blank was processed to a finished product size by using a roll-in-two-heat process. Firstly, the continuously casting blank was heated to 1240°C and held for 3 h. Then the continuous casting blank was discharged from a heating furnace and subjected to high-pressure water descaling. Then rolling was performed to manufacture an intermediate slab having a size of 220×220 mm, wherein the initial rolling temperature was controlled to be 1110°C, and the final rolling temperature was controlled to be 970°C. The obtained intermediate slab was then heated to 1150°C and held for 8 h, and then was discharged from the furnace and subjected to high-pressure water descaling. After that, rolling was performed to manufacture a steel having a specification of Φ42 mm, wherein the initial rolling temperature was controlled to be 1075°C, and the final rolling temperature was controlled to be 910°C. Air cooling was performed after the rolling. Then quenching and tempering heat treatment was performed, wherein the heating temperature of quenching was controlled to be 910°C and the holding time was controlled to be 2.5 h, and the tempering temperature was controlled to be 530°C and the holding time was controlled to be 1.5 h. Then water cooling was performed to cool the steel to room temperature.

### Example 4

Electric furnace smelting was performed according to the chemical compositions shown in Table 1-1 and Table 1-2. LF refining and VD vacuum treatment were performed, and then casting was performed to obtain a continuous casting blank. During the continuous casting, the baking temperature of a tundish was controlled to be 1200°C, and the baking time was controlled to be 3.5 h; and the slow cooling time of the casting blank was controlled to be 24 h. In this Example, the casting blank was processed to a finished product size by using a roll-in-one-heat process. The continuously casting blank was heated to 1200°C and held for 6 h. Then the continuous casting blank was discharged from a heating furnace and subjected to high-pressure water descaling. Then rolling was performed to manufacture a steel having a specification of Φ150 mm, wherein the initial rolling temperature was controlled to be 1100°C, and the final rolling temperature was controlled to be 960°C. Piling-up cooling was performed after the rolling. Then quenching and tempering heat treatment was performed, wherein the heating temperature of quenching was controlled to be 880°C and the holding time was controlled to be 6 h, and the tempering temperature was controlled to be 570°C and the holding time was controlled to be 4 h. Then air cooling was performed to cool the steel to room temperature.

### Example 5

Electric furnace smelting was performed according to the chemical compositions shown in Table 1-1 and Table 1-2. LF refining and VD vacuum treatment were performed, and then casting was performed to obtain a continuous casting blank. During the continuous casting, the baking temperature of a tundish was controlled to be 1300°C, and the baking time was controlled to be 4 h; and the slow cooling time of the casting blank was controlled to be 26 h. In this Example, the casting blank was processed to a finished product size by using a roll-in-one-heat process. The continuously casting blank was heated to 1170°C and held for 8 h. Then the continuous casting blank was discharged from a heating furnace and subjected to high-pressure water descaling. Then rolling was performed to manufacture a steel having a specification of Φ130 mm, wherein the initial rolling temperature was controlled to be 1070°C, and the final rolling temperature was controlled to be 930°C. Piling-up cooling was performed after the rolling. Then quenching and tempering heat treatment was performed, wherein the heating temperature of quenching was controlled to be 960°C and the holding time was controlled to be 5 h, and the tempering temperature was controlled to be 600°C and the holding time was controlled to be 3 h. Then air cooling was performed to cool the steel to room temperature.

### Example 6

Converter smelting was performed according to the chemical compositions shown in Table 1-1 and Table 1-2, LF refining and RH vacuum treatment were performed, and then casting was performed by using die casting to obtain a casting blank. During the die casting, the baking temperature of ingot mould was controlled to be 200°C, and the slow cooling time of the casting blank was controlled to be 48 h. In this Example, the casting blank was processed to a finished product size by using a roll-in-one-heat process. The casting blank was heated to 1180°C and held for 10 h. Then the casting blank was discharged from a heating furnace and subjected to high-pressure water descaling. Then rolling was performed to manufacture a steel having a specification of Φ100 mm, wherein the initial rolling temperature was controlled to be 1050°C, and the final rolling temperature was controlled to be 900°C. Air cooling was performed after rolling. Then quenching and tempering heat treatment was performed, wherein the heating temperature of quenching was controlled to be 900°C and the holding time was controlled to be 6 h, and the tempering temperature was controlled to be 580°C and the holding time was controlled to be 3 h. Then air cooling was performed to cool the steel to room temperature.

### Example 7

Converter smelting was performed according to the chemical compositions shown in Table 1-1 and Table 1-2, LF refining and RH vacuum treatment were performed, and then casting was performed by using die casting to obtain a casting blank. During the die casting, the baking temperature of ingot mould was controlled to be 240°C, and the slow cooling time of the casting blank was controlled to be 40 h. In this Example, the casting blank was processed to a finished product size by using a roll-in-one-heat process. The casting blank was heated to 1220°C and held for 5 h. Then the casting blank was discharged from a heating furnace and subjected to high-pressure water descaling. Then rolling was performed to manufacture a steel having a specification of Φ75 mm, wherein the initial rolling temperature was controlled to be 1100°C, and the final rolling temperature was controlled to be 950°C. Air cooling was performed after rolling. Then quenching and tempering heat treatment was performed, wherein the heating temperature of quenching was controlled to be 950°C and the holding time was controlled to be 5 h, and the tempering temperature was controlled to be 480°C and the holding time was controlled to be 2.5 h. Then water cooling was performed to cool the steel to room temperature.

### Example 8

Converter smelting was performed according to the chemical compositions shown in Table 1-1 and Table 1-2, LF refining and RH vacuum treatment were performed, and then casting was performed by using die casting to obtain a casting blank. During the die casting, the baking temperature of ingot mould was controlled to be 220°C, and the slow cooling time of the casting blank was controlled to be 44 h. In this Example, the casting blank was processed to a finished product size by using a roll-in-one-heat process. The casting blank was heated to 1160°C and held for 11 h. Then the casting blank was discharged from a heating furnace and subjected to high-pressure water descaling. Then rolling was performed to manufacture a steel having a specification of Φ110 mm, wherein the initial rolling temperature was controlled to be 1060°C, and the final rolling temperature was controlled to be 920°C. Air cooling was performed after rolling. Then quenching and tempering heat treatment was performed, wherein the heating temperature of quenching was controlled to be 980°C and the holding time was controlled to be 3 h, and the tempering temperature was controlled to be 550°C and the holding time was controlled to be 3.5 h. Then water cooling was performed to cool the steel to room temperature.

### Example 9

Converter smelting was performed according to the chemical compositions shown in Table 1-1 and Table 1-2, LF refining and RH vacuum treatment were performed, and then casting was performed by using die casting to obtain a casting blank. During the die casting, the baking temperature of ingot mould was controlled to be 270°C, and the slow cooling time of the casting blank was controlled to be 42 h. In this Example, the casting blank was processed to a finished product size by using a roll-in-two-heat process. Firstly, the casting blank was heated to 1190°C and held for 9 h. Then the casting blank was discharged from a heating furnace and subjected to high-pressure water descaling. Then rolling was performed to manufacture an intermediate slab having a size of 220×220 mm, wherein the initial rolling temperature was controlled to be 1080°C, and the final rolling temperature was controlled to be 960°C. The obtained intermediate slab was then heated to 1190°C and held for 4 h, and then was discharged from the furnace and subjected to high-pressure water descaling. After that, rolling was performed to manufacture a steel having a specification of Φ26 mm, wherein the initial rolling temperature was controlled to be 1080°C, and the final rolling temperature was controlled to be 860°C. Air cooling was performed after rolling. Then quenching and tempering heat treatment was performed, wherein the heating temperature of quenching was controlled to be 860°C and the holding time was controlled to be 2 h, and the tempering temperature was controlled to be 500°C and the holding time was controlled to be 1 h. Then air cooling was performed to cool the steel to room temperature.

### Example 10

Converter smelting was performed according to the chemical compositions shown in Table 1-1 and Table 1-2, LF refining and RH vacuum treatment were performed, and then casting was performed by using die casting to obtain a casting blank. During the die casting, the baking temperature of ingot mould was controlled to be 300°C, and the slow cooling time of the casting blank was controlled to be 38 h. In this Example, the casting blank was processed to a finished product size by using a roll-in-two-heat process. The casting blank was heated to 1210°C and held for 7 h. Then the casting blank was discharged from a heating furnace and subjected to high-pressure water descaling. Then rolling was performed to manufacture an intermediate slab having a size of 250×250 mm, wherein the initial rolling temperature was controlled to be 1120°C, and the final rolling temperature was controlled to be 990°C. The obtained intermediate slab was heated to 1200°C and held for 3 h, and then was discharged from the furnace and subjected to high-pressure water descaling. After that, rolling was performed to manufacture a steel having a specification of Φ48 mm, wherein the initial rolling temperature was controlled to be 1100°C, and the final rolling temperature was controlled to be 900°C. Air cooling was performed after rolling. Then quenching and tempering heat treatment was performed, wherein the heating temperature of quenching was controlled to be 930°C and the holding time was controlled to be 3 h, and the tempering temperature was controlled to be 460°C and the holding time was controlled to be 2.5 h. Then water cooling was performed to cool the steel to room temperature.

Different from the steels in Examples 1-10, the steels in Comparative Examples 1-3 are finished steels from different manufacturers. The processing processes of the steels in Comparative Examples 1-3 are different from those of the steels in Examples 1-10. The specific process parameters employed in the Comparative Examples 1-3 are shown Table 2-1 and Table 2-2 below.

Table 2-1 and Table 2-2 list the specific process parameters of the steels in Examples 1-10 and Comparative Examples 1-3 in the above process steps.

**Table 2-1**

| No. | Step (1) | | | | | Step (2) | | | |
|---|---|---|---|---|---|---|---|---|---|
| | Smelting and casting process | Ingot mould baking temperature (°C) | Tundish baking temperature (°C) | Baking time (h) | Slow cooling time of casting blank (h) | Casting blank heating temperature (°C) | Holding time of casting blank heating (h) | Initial rolling temperature (°C) | Final rolling temperature (°C) |
| Example 1 | Electric furnace + refining + continuous casting | - | 1150 | 5 | 35 | 1150 | 12 | 1090 | 950 |
| Example 2 | Electric furnace + refining + continuous casting | - | 1100 | 6 | 30 | 1220 | 4 | 1120 | 980 |
| Example 3 | Electric furnace + refining + continuous casting | - | 1250 | 4.5 | 28 | 1240 | 3 | 1110 | 970 |
| Example 4 | Electric furnace + refining + continuous casting | - | 1200 | 3.5 | 24 | 1200 | 6 | 1100 | 960 |
| Example 5 | Electric furnace + refining + continuous casting | - | 1300 | 4 | 26 | 1170 | 8 | 1070 | 930 |
| Example 6 | Converter + refining + die casting | 200 | - | - | 48 | 1180 | 10 | 1050 | 900 |
| Example 7 | Converter + refining + die casting | 240 | - | - | 40 | 1220 | 5 | 1100 | 950 |
| Example 8 | Converter + refining + die casting | 220 | - | - | 44 | 1160 | 11 | 1060 | 920 |
| Example 9 | Converter + refining + die casting | 270 | - | - | 42 | 1190 | 9 | 1080 | 960 |
| Example 10 | Converter + refining + die casting | 300 | - | - | 38 | 1210 | 7 | 1120 | 990 |
| Comparative Example 1 | Electric furnace + refining + continuous casting | - | - | - | - | - | - | - | - |
| Comparative Example 2 | Electric furnace + refining + continuous casting | - | - | - | - | - | - | - | - |
| Comparative Example 3 | Electric furnace + refining + continuous casting | - | - | - | - | - | - | - | - |

**Table 2-2**

| No. | Step (2) | | | | | | Step (3) | | | |
|---|---|---|---|---|---|---|---|---|---|---|
| | Intermediate slab size (mm) | Intermediate slab heating temperature (°C) | Holding time of intermediate slab heating (h) | Initial rolling temperature of intermediate slab (°C) | Final rolling temperature of intermediate slab (°C) | Finished product size (mm) | Heating temperature of quenching (°C) | Holding time of quenching (h) | Tempering temperature (°C) | Holding time of tempering (h) |
| Example 1 | 280×280 | 1120 | 10 | 1050 | 880 | Φ75 | 940 | 4 | 450 | 3 |
| Example 2 | 260×260 | 1130 | 6 | 1060 | 890 | Φ60 | 990 | 3 | 420 | 2 |
| Example 3 | 220×220 | 1150 | 8 | 1075 | 910 | Φ42 | 910 | 2.5 | 530 | 1.5 |
| Example 4 | - | - | - | - | - | Φ150 | 880 | 6 | 570 | 4 |
| Example 5 | - | - | - | - | - | Φ130 | 960 | 5 | 600 | 3 |
| Example 6 | - | - | - | - | - | Φ100 | 900 | 6 | 580 | 3 |
| Example 7 | - | - | - | - | - | Φ75 | 950 | 5 | 480 | 2.5 |
| Example 8 | - | - | - | - | - | Φ110 | 980 | 3 | 550 | 3.5 |
| Example 9 | 220×220 | 1190 | 4 | 1080 | 860 | Φ26 | 860 | 2 | 500 | 1 |
| Example 10 | 250×250 | 1200 | 3 | 1100 | 900 | Φ48 | 930 | 3 | 460 | 2.5 |
| Comparative Example 1 | - | - | - | - | - | Φ42 | 880 | ***1*** | 430 | 1 |
| Comparative Example 2 | - | - | - | - | - | Φ42 | 880 | ***1*** | 450 | 1 |
| Comparative Example 3 | - | - | - | - | - | Φ26 | 860 | 2 | 500 | 1 |

The performances of the finished steels in Examples 1-10 and Comparative Examples 1-3 were tested to obtain performance parameters of the finished steels in the Examples and Comparative Examples.

The steels in Examples 1-10 and Comparative Examples 1-3 were subjected to a tensile test and an impact performance test, respectively. The test results of the steels in the Examples and Comparative Examples are listed in Table 3.

Specific test methods for the related tensile test and impact test are described below:
Tensile test: The steels in the Examples and Comparative Examples were sampled according to a national standard GB/T 2975-2018 to prepare tensile specimens. Tensile properties of the specimens were tested according to a national standard GB/T 228.1-2010 to measure yield strength R_{p0.2}, tensile strength Rₘ, elongation A and percentage reduction of area of the steels in Examples 1-10 and Comparative Examples 1-3.
Impact test: The steels in the Examples and Comparative Examples were sampled according to the national standard GB/T 2975-2018 to prepare impact specimens. Impact properties of the impact specimens were tested according to a national standard GB/T 229-2020 to measure Charpy impact energy Aₖᵥ at room temperature and Charpy impact energy Aₖᵥ at -20°C of the steels in Examples 1-10 and Comparative Examples 1-3.

Table 3 lists the performance parameters of the steels in Examples 1-10 and Comparative Examples 1-3.

**Table 3**

| No. | Yield strength R_{p0.2} (MPa) | Tensile strength Rₘ (MPa) | Elongation A (%) | Reduction of area Z (%) | Charpy impact energy Aₖᵥ at room temperature (J) | Charpy impact energy Aₖᵥ at -20°C (J) |
|---|---|---|---|---|---|---|
| Example 1 | 1260 | 1378 | 14.5 | 55 | 95 | 86 |
| Example 2 | 1255 | 1405 | 14 | 52 | 101 | 92 |
| Example 3 | 1176 | 1291 | 17.5 | 65 | 107 | 93 |
| Example 4 | 1135 | 1285 | 16 | 58 | 99 | 95 |
| Example 5 | 1125 | 1286 | 18.5 | 68 | 115 | 109 |
| Example 6 | 1196 | 1363 | 18 | 62 | 109 | 96 |
| Example 7 | 1185 | 1298 | 15 | 55 | 97 | 88 |
| Example 8 | 1140 | 1277 | 17 | 61 | 125 | 112 |
| Example 9 | 1240 | 1350 | 15.5 | 55 | 90 | 87 |
| Example 10 | 1300 | 1440 | 14 | 52 | 85 | 76 |
| Comparative Example 1 | 1104 | 1289 | 13 | 58 | 65 | 61 |
| Comparative Example 2 | 1205 | 1353 | 12 | 51 | 75 | 67 |
| Comparative Example 3 | 590 | 800 | 20 | 58 | 117 | 90 |

As can be seen from Table 3, the steels in Examples 1-10 of the present disclosure have excellent comprehensive performance. The steels in Examples 1-10 have a yield strength R_{p0.2} of 1125-1300 MPa, a tensile strength Rₘ of 1277-1440 MPa, an elongation A of 14-18.5%, a percentage reduction of area of 52-68%, a Charpy impact energy Aₖᵥ at room temperature of 85-125 J and a Charpy impact energy Aₖᵥ at -20°C of 76-112 J.

Accordingly, it can be seen from Table 3 that the comprehensive performance of the steels in Examples 1-10 of the present disclosure is significantly better than that of the steels in Comparative Examples 1-3.

As can be seen from Tables 1 to 3, Comparative Example 1 is a 23MnNiMoCr54 steel having a weather resistance index I of 6.43, which is significantly lower than that of the steels in Examples 1-10 of the present disclosure, indicating that the weather resistance of the steel in Comparative Example 1 is inferior to that of the steels in the Examples of the present disclosure. In addition, the element content ratio (12×C+0.3×Mn+Ni)/(Cr+2Mo+2Si) of the steel in Comparative Example 1 is also lower than that of the steels in Examples 1-10, and the mechanical properties and impact energy of the steel in Comparative Example 1 are also lower than those of the steels in Examples 1-10.

A large amount of Ni, Mn, and Cu alloying elements were added to the steel in Comparative Example 2, which has a weather resistance index I=13.33. The weather resistance of the steel in Comparative Example 2 is comparable to that of the steels in Examples 1-10. However, the element content ratio (12×C+0.3×Mn+Ni)/(Cr+2Mo+2Si) of the steel in Comparative Example 2 is not within the scope of the present disclosure, so that the steel in Comparative Example 2 has an elongation and an impact energy which are lower than those of the steels in Examples 1-10 although it has higher strength. This indicates that the steels in Examples 1-10 of the present disclosure have balanced improved strength and toughness and plasticity compared with Comparative Example 2.

The strength of the steel in Comparative Example 3 is much lower than that of the steels in Examples 1-10 of the present disclosure, while the weather resistance index of the steel in Comparative Example 3 is also lower than that of the steels in Examples 1-10 of the present disclosure. This indicates that the steels in Examples 1-10 of the present disclosure have remarkably improved strength and weather resistance compared with Comparative Example 3.

In summary, it can be seen that in the present disclosure, the steel with excellent performance is obtained through reasonable chemical composition design combined with an optimized process. The steel of the present disclosure has excellent comprehensive performance, high strength, well matched toughness and plasticity, and excellent welding performance and weather resistance. The steel of the present disclosure can be manufactured into high-strength weather-resistant structural parts and high-performance industrial chains such as mining chains and mooring chains, and is widely applied to occasions requiring high-strength and high-toughness steel such as engineering machinery, mining and marine engineering, and can well solve the problem that the service life of the existing steel is affected due to the mismatch of strength, toughness and plasticity, welding performance and weather resistance.

FIG. 1 is a photograph of the microstructure of the steel in Example 1 under a 5000X microscope.

As shown in FIG. 1, in the present disclosure, the microstructure of the steel in Example 1 that has completed the heat treatment process of quenching and tempering includes tempered martensite + tempered bainite + carbides diffusely distributed between lamellae. Thus, it can be seen that in the present disclosure, by optimizing the composition ratio of the steel, combined with appropriate heat treatment process of quenching and tempering, diffusely distributed carbides can be obtained in a lamella of a fine strip martensitic structure, which can improve the toughness and plasticity of the steel, so that the steel in Example 1 has excellent comprehensive mechanical properties.

It should be noted that the combinations of the technical features in the present disclosure are not limited to the combinations described in the claims of the present disclosure or the combinations described in the specific embodiments, and all technical features described in the present disclosure can be freely combined or integrated in any way unless there is a conflict between the technical features.

It should also be noted that the embodiments listed above are only specific examples of the present disclosure. Obviously, the present disclosure is not limited to the above embodiments, and similar changes or variations made accordingly can be directly derived or can be easily thought of by those skilled in the art from the disclosure of the present disclosure, and all fall within the protection scope of the present disclosure.

## Claims

1. A steel, **characterized by** containing the following chemical elements in percentage by mass apart from 90% or more by mass of Fe and inevitable impurities:
C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%.

2. The steel according to claim 1, **characterized by** consisting of the following chemical elements in percentage by mass:
C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%, the balance being Fe and inevitable impurities.

3. The steel according to claim 1 or 2, **characterized by** further containing Nb and/or Ti, wherein 0<Nb≤0.04%, and 0<Ti≤0.03%.

4. The steel according to claim 1 or 2, **characterized in that** the contents of elements C, Mn, Ni, Cr, Mo and Si in percentage by mass in the steel satisfy: 2.5≤(12×C+0.3×Mn+Ni)/(Cr+2Mo+2Si)≤3.2, wherein a symbol for a chemical element in the formula represents a numerical value before the percent sign of the content in mass percentage corresponding to the chemical element.

5. The steel according to claim 1 or 2, **characterized in that** the contents of the inevitable impurities in percentage by mass satisfy: P≤0.015%, S≤0.01%, and O≤0.002%.

6. The steel according to claim 1 or 2, **characterized in that** the steel has a weather resistance index I of 10.0 or more, wherein I=26.01×Cu+3.88×Ni+1.20×Cr+1.49×Si +17.28×P-7.29×Cu×Ni-9.10×Ni×P-33.39×Cu², wherein a symbol for a chemical element in the formula represents a numerical value before the percent sign in the content in mass percentage corresponding to the chemical element.

7. The steel according to claim 1 or 2, **characterized in that** the steel has a microstructure of tempered martensite + tempered bainite + interlamellar carbides diffusely distributed between lamellae.

8. The steel according to claim 1 or 2, **characterized in that** the steel has a yield strength R_{p0.2} of 1100 MPa or more, a tensile strength Rₘ of 1250 MPa or more, an elongation A of 14% or more, a percentage reduction of area of 50% or more, a Charpy impact energy Aₖᵥ at room temperature of 80 J or more, and a Charpy impact energy Aₖᵥ at - 20°C of 70 J or more.

9. A method for manufacturing the steel according to any one of claims 1-8, **characterized by** comprising the steps of
(1) smelting and casting molten steel to manufacture a casting blank;
(2) forging or rolling the casting blank, wherein the casting blank is forged or rolled by using a roll-in-one-heat process or a roll-in-two-heat process; and
(3) performing quenching and tempering to manufacture a finished steel: in the quenching process, heating is performed at a temperature of 860-1000°C for a time of 2-6 h and a water cooling is then performed; following the quenching, the tempering is performed, wherein in the tempering process, tempering temperature is 400-600°C and holding time is 1-4 h; and an air cooling is then performed to cool the steel to room temperature after the tempering.

10. The method according to claim 9, **characterized in that** in the step (1), the smelted molten steel is cast into the casting blank by using die casting or continuous casting, and preferably, the casting blank is subjected to slow cooling for 24 h or more; wherein in the case of using the die casting, baking temperature of an ingot mould is 200°C or more; and in the case of using the continuous casting, baking temperature of a tundish is 1100°C or more and baking time is 3.5 h or more.

11. The method according to claim 9, **characterized in that** in the step (2), the casting blank is directly processed to a finished product size by using the roll-in-one-heat process, wherein heating temperature of the casting blank is 1150-1250°C and holding time is 3-12 h; and initial rolling temperature or initial forging temperature is 1050°C or more, and final rolling temperature or final forging temperature is 900°C or more.

12. The method according to claim 9, **characterized in that** in the step (2), the casting blank is first processed to an intermediate slab by using the roll-in-two-heat process, and then the intermediate slab is processed to a finished product size, wherein heating temperature of the casting blank is 1150-1250°C, holding time is 3-12 h, initial rolling temperature or initial forging temperature is 1050°C or more, and final rolling temperature or final forging temperature is 950°C or more; and heating temperature of the intermediate slab is 1120-1200°C, holding time is 3-10 h, initial rolling temperature of the intermediate slab is 1050°C or more, and final rolling temperature of the intermediate slab is 860°C or more.

## Amended claims

### Amended claims under Art. 19.1 PCT

1. A steel, **characterized by** consisting of the following chemical elements in percentage by mass:
C: 0.22-0.33%, Si: 0.1-1.0%, Mn: 0.3-1.5%, Cr: 0.2-1.6%, Ni: 2.2-3.8%, Mo: 0.1-0.7%, Cu: 0.02-0.3%, Al: 0.01-0.045%, V: 0.01-0.25%, and N ≤ 0.013%, the balance being Fe and inevitable impurities;
wherein the contents of elements C, Mn, Ni, Cr, Mo and Si in percentage by mass in the steel satisfy: 2.5≤(12×C+0.3×Mn+Ni)/(Cr+2Mo+2Si)≤3.2, wherein a symbol for a chemical element in the formula represents a numerical value before the percent sign of the content in mass percentage corresponding to the chemical element.

2. The steel according to claim 1, **characterized by** further containing Nb and/or Ti, wherein 0<Nb≤0.04%, and 0<Ti≤0.03%.

3. The steel according to claim 1, **characterized in that** the contents of the inevitable impurities in percentage by mass satisfy: P≤0.015%, S≤0.01%, and O≤0.002%.

4. The steel according to claim 1, **characterized in that** the steel has a weather resistance index I of 10.0 or more, wherein I=26.01×Cu+3.88×Ni+1.20×Cr+1.49×Si+17.28×P-7.29×Cu×Ni-9.10×Ni×P-33.39×Cu², wherein a symbol for a chemical element in the formula represents a numerical value before the percent sign of the content in mass percentage corresponding to the chemical element.

5. The steel according to claim 1, **characterized in that** the steel has a microstructure of tempered martensite + tempered bainite + interlamellar carbides diffusely distributed between lamellae.

6. The steel according to claim 1, **characterized in that** the steel has a yield strength R_{p0.2} of 1100 MPa or more, a tensile strength Rₘ of 1250 MPa or more, an elongation A of 14% or more, a percentage reduction of area of 50% or more, a Charpy impact energy Aₖᵥ at room temperature of 80 J or more, and a Charpy impact energy Aₖᵥ at -20°C of 70 J or more.

7. A method for manufacturing the steel according to any one of claims 1-6, **characterized by** comprising the steps of
(1) smelting and casting molten steel to manufacture a casting blank;
(2) forging or rolling the casting blank, wherein the casting blank is forged or rolled by using a roll-in-one-heat process or a roll-in-two-heat process; and
(3) performing quenching and tempering to manufacture a finished steel: in the quenching process, heating is performed at a temperature of 860-1000°C for a time of 2-6 h and a cooling is performed by water cooling; and then the tempering is performed, wherein in the tempering process, tempering temperature is 400-600°C and holding time is 1-4 h; and an air cooling is then performed to cool the steel to room temperature after the tempering.

8. The method according to claim 7, **characterized in that** in the step (1), the smelted molten steel is cast into the casting blank by using die casting or continuous casting, and preferably, the casting blank is subjected to slow cooling for 24 h or more; wherein in the case of using the die casting, baking temperature of an ingot mould is 200°C or more; and in the case of using the continuous casting, baking temperature of a tundish is 1100°C or more and baking time is 3.5 h or more.

9. The method according to claim 7, **characterized in that** in the step (2), the casting blank is directly processed to a finished product size by using the roll-in-one-heat process, wherein heating temperature of the casting blank is 1150-1250°C and holding time is 3-12 h; and initial rolling temperature or initial forging temperature is 1050°C or more, and final rolling temperature or final forging temperature is 900°C or more.

10. The method according to claim 7, **characterized in that** in the step (2), the casting blank is first processed to an intermediate slab by using the roll-in-two-heat process, and then the intermediate slab is processed to a finished product size, wherein heating temperature of the casting blank is 1150-1250°C, holding time is 3-12 h, initial rolling temperature or initial forging temperature is 1050°C or more, and final rolling temperature or final forging temperature is 950°C or more; and heating temperature of the intermediate slab is 1120-1200°C, holding time is 3-10 h, initial rolling temperature of the intermediate slab is 1050°C or more, and final rolling temperature of the intermediate slab is 860°C or more.
